# EUROPÄISCHE PATENTANMELDUNG

(11) **EP 1 911 539 A1**
(43) Veröffentlichungstag der Anmeldung: **16.04.2008**
(21) Anmeldenummer: 07117689.5
(22) Anmeldetag: 02.10.2007
(51) Int. Cl.: B23D 51/01, B27G 19/00

(54) **Elektrische Hubsäge mit Abschirmelement**

(30) Priorität: 12.10.2006 DE 102006035343
(71) Anmelder: HILTI Aktiengesellschaft, 9494 Schaan (LI)
(72) Erfinder: Hunger, Josef, 86925, Fuchstal (DE)
(74) Vertreter: Wildi, Roland

(57) **Zusammenfassung**

Eine Elektrische Hubsäge (2) weist eine hin- und hergehend antreibbare Werkzeuganordnung (6), die eine Werkzeugaufnahme (10) aufweist, an der ein Sägeblatt (12) festlegbar ist, und ein sich entlang einer Hubachse (A) der Werkzeuganordnung (6) erstreckendes Gehäuse (4) auf, das einen Gerätehals (14) mit Haltegriff (20) bildet, wobei der Gerätehals (14) eine Gehäuseöffnung (18) umschliesst, durch die hindurch ein Abschnitt der Werkzeuganordnung (6) hin- und herbewegbar ist, und auf einer ersten Seite (26) der Werkzeuganordnung (6) Festlegemittel (28) zur Befestigung einer Führungshilfe (32) vorgesehen sind. Es ist vorgesehen, dass auf einer zweiten Seite (34) der Werkzeuganordnung (6) ein von der Führungshilfe (32) getrenntes Abschirmelement (36) vorgesehen ist, das sich von einem werkzeugseitigen Ende (16) des Gerätehalses (14) weg über einen aus der Gehäuseöffnung (18) herausstehenden Abschnitt der Werkzeuganordnung (6) teilweise hinweg erstreckt.

## Beschreibung

Die Erfindung betrifft eine elektrische Hubsäge, insbesondere eine Säbelsäge, mit den Merkmalen gemäss dem Oberbegriff von Patentanspruch 1. Dabei weist die Hubsäge eine hin- und hergehend antreibbare Werkzeuganordnung mit einer Werkzeugaufnahme auf, an der ein Sägeblatt festlegbar ist. Ferner weist die Hubsäge ein sich im Wesentlichen parallel zur Hubachse der Werkzeuganordnung erstreckendes Gehäuse auf, das einen Gerätehals ausbildet, der bereichsweise als Haltegriff dient, wobei der Gerätehals eine Gehäuseöffnung umschliesst, durch die hindurch ein Abschnitt der Werkzeuganordnung hin- und herbewegbar ist. Zudem sind an dem Gerätehals auf einer ersten Seite bezüglich der Werkzeuganordnung Festlegemittel zur Befestigung einer Führungshilfe vorgesehen.

Derartige Hubsägen werden im Betrieb mit einer Hand am Haltegriff des Gerätehalses gehalten. Dabei liegen Daumen und Zeigefinger der haltenden Hand an einem werkzeugseitigen Ende des Haltegriffes.

Aus der US-D 524,130 ist eine Säbelsäge mit einem Gerätehals bekannt, der abschnittsweise als Haltegriff dient. Dabei ist an einer Öffnung des Gerätehalses, durch die hindurch eine Werkzeugaufnahme hin- und herbewegbar ist, ein Kragen des Haltegriffes vorgesehen, an dem ein Zeigefinger oder ein Daumen der haltenden Hand anlegbar ist. Ferner ist ein Führungsschuh über einen Träger am Gehäuse gehalten. Der Träger erstreckt sich dabei im Wesentlichen parallel zu einer Hubachse der Werkzeugaufnahme von einer Unterseite des Haltegriffes weg, an der in der vorgesehenen Haltestellung der haltenden Hand der Zeigefinger anliegt.

Nachteilig an der bekannten Säbelsäge ist, dass bei einer Nichtbeachtung der Vorsichtsmassnahmen, wie beispielsweise dem Nichttragen von Sicherheitshandschuhen, es im Betrieb zu einem Abrutschen eines Fingers, insbesondere des Daumens oder eines kleinen Fingers über den Kragen hinweg in den Bereich der Werkzeugaufnahme kommen kann.

Ferner ist in US-D 523,310 eine Säbelsäge gezeigt, an deren Gerätehals ein Adapter angebracht ist. Der Adapter dient einerseits zur Festlegung eines Sägeblattes. Andererseits fungiert das Gehäuse des Adapters als Führungsmittel.

Der Adapter bietet hier zwar einen gewissen Schutz gegen einen ungewollten Zugriff auf die Werkzeugaufnahme im Betrieb. Bei Anwendungen, für die der Adapter entfernt wird, ist dieser Schutz jedoch nicht mehr gegeben.

Der vorliegenden Erfindung liegt die Aufgabe zugrunde, bei einer elektrischen Hubsäge die genannten Nachteile zu vermeiden und eine sichere Positionierung der haltenden Hand zu gewährleisten.

Erfindungsgemäss wird diese Aufgabe durch eine elektrische Hubsäge mit den Merkmalen von Patentanspruch 1 gelöst, wobei auf einer zweiten Seite der Werkzeuganordnung ein von der Führungshilfe getrenntes Abschirmelement vorgesehen ist, das sich von einem werkzeugseitigen Ende des Gerätehalses weg erstreckt und das separat zu der Führungshilfe ausgeführt und gehalten ist. Das Abschirmelement erstreckt sich dabei über einen Teil eines aus der Gehäuseöffnung herausstehenden Abschnittes der Werkzeuganordnung hinweg. Hierdurch wird unabhängig von der Führungshilfe, die als zusätzlicher Schutz vor einem ungewollten Zugriff auf die Werkzeugaufnahme im Betrieb fungieren kann, eine teilweise Abschirmung der Werkzeuganordnung gegenüber der haltenden Hand vorgesehen. Diese zusätzliche Abschirmung bietet hierbei eine zusätzliche Anlegemöglichkeit für die haltende Hand und kann hierzu mit dem Haltegriff fest oder lösbar verbunden sein. Um dabei auch an dem Abschirmelement einen sicheren Halt zu gewährleisten, können hier beispielsweise Gumminoppen, eine Riffelung, eine Fingermulde oder sonstige bekannte Mittel vorgesehen sein, die einen besseren Griff gewährleisten.

In einer besonders bevorzugten Ausführungsform ist dabei das Abschirmelement einteilig mit dem Haltegriff ausgebildet. Auf diese Weise kann das Abschirmelement auf kostengünstige Weise zusammen mit dem Haltegriff, beispielsweise in einem Gussverfahren, hergestellt und montiert werden. Der Teil des Gerätehalses, der den Handgriff bildet, kann dabei einstückig mit dem übrigen Gerätehals oder aber als separat hergestelltes Element ausgebildet sein, das vorzugsweise aus einem relativ zum übrigen Gehäuse weichen Material hergestellt ist. Gleichzeitig ist hierbei sichergestellt, dass das Abschirmelement dauerhaft an der Hubsäge verbleibt und somit einen permanenten Schutz bietet.

Vorteilhafterweise ragt das Abschirmelement an einem sich im Wesentlichen quer zur Hubachse erstreckenden Kragen des Haltegriffes ab. Ein solcher Kragen ermöglicht ein komfortables Anlegen des Daumens oder des Zeigefingers der haltenden Hand und gibt dadurch eine erste sichere Position der haltenden Hand vor. Des Weiteren ermöglicht das Abschirmelement eine weitere sichere Position der haltenden Hand auch dann, wenn diese wegen der Nichtbeachtung von Sicherheitsvorschriften, wie dem Nichttragen von Sicherheitshandschuhen, teilweise über den Kragen hinweg gerutscht ist.

Bevorzugterweise erstreckt sich das Abschirmelement quer zur Hubachse über einen Winkelbereich von wenigstens 90° um die Hubachse herum, wodurch die Werkzeugaufnahme zu einer Seite hin komplett abgeschirmt ist. Hierdurch wird eine über einen grossen Bereich wirksame zusätzliche Anlegemöglichkeit für die haltende Hand bereit gestellt. Gleichzeitig können durch die begrenzte Erstreckung des Abschirmelementes im Betrieb unnötige Behinderungen, beispielsweise durch Verkanten, vermieden werden.

Vorteilhafterweise erstreckt sich das Abschirmelement bezüglich der Werkzeuganordnung auf einer von den Festlegemitteln abgewandten Seite vom Gehäuse weg. Hierdurch kann die Werkzeuganordnung mittels der Führungshilfe zu einer ersten Seite und mittels des Abschirmelementes zu einer gegenüberliegenden zweiten Seite hin abgeschirmt werden. Auf diese Weise kann sowohl für den Daumen als auch für den Zeigefinger eine sichere zusätzliche Anlegemöglichkeit bereitgestellt werden.

In einer besonders vorteilhaften Ausführungsform ist das Abschirmelement auf Höhe eines Hubabschnittes der Werkzeugaufnahme angeordnet, über den hinweg die Werkzeugaufnahme hin- und herbewegt wird. Auf diese Weise wird im Betrieb jederzeit eine sichere Position der haltenden Hand gegenüber der Werkzeugaufnahme sichergestellt.

Die Erfindung wird nachstehend anhand eines Ausführungsbeispieles näher erläutert. Es zeigen:
- Fig. 1: eine perspektivische Ansicht eines werkzeugseitigen Endes einer erfindungsgemässen Hubsäge,
- Fig. 2: einen Längsschnitt durch die Hubsäge nach Fig. 1 und
- Fig. 3: einen in der Ebene III aus Fig. 2.

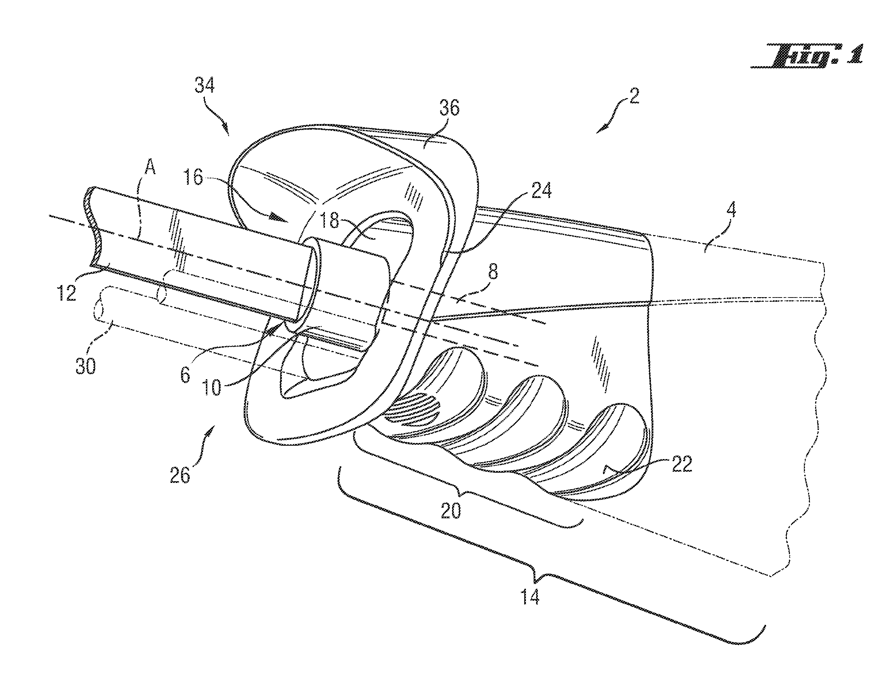

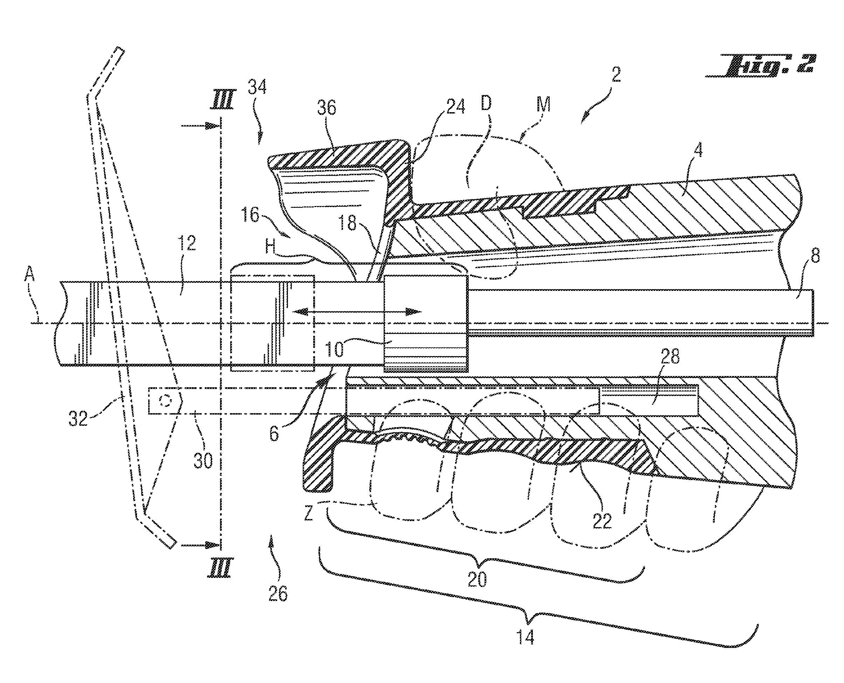

Fig. 1 und 2 zeigen einen werkzeugseitigen Teil einer Hubsäge 2 in der Form einer Säbelsäge. Diese weist ein Gehäuse 4 auf, das sich im Wesentlichen entlang einer Hubachse A erstreckt. Entlang dieser Hubachse A ist eine Werkzeuganordnung 6 hin- und herbewegbar, die eine durch eine Werkzeugspindel 8 antreibbare Werkzeugaufnahme 10 aufweist, an der ein Sägeblatt 12 festlegbar ist.

Das Gehäuse 4 bildet einen Gerätehals 14 aus, der an einem werkzeugseitigen Ende 16 eine Gehäuseöffnung 18 umschliesst. Durch diese Gehäuseöffnung 18 hindurch ist die Werkzeugaufnahme 10 über einen Hubabschnitt H hinweg hin- und herbewegbar, der insbesondere aus Fig. 2 hervorgeht.

Wie insbesondere aus Fig. 2 ferner zu entnehmen ist, weist der Gerätehals 14 einen Haltegriff 20 für eine Hand M auf. Dieser kann sowohl einstückig mit dem übrigen Gerätehals 14 als auch durch ein separates Element hergestellt sein, das vorzugsweise aus einem gegenüber dem restlichen Gehäuse 4 relativ weichen Material besteht. Dabei sind mehrere Griffmulden 22 in den Haltegriff 20 eingelassen. Zudem weist der Gerätehals 14 einen Kragen 24 auf, der sich überwiegend quer zur Hubachse A erstreckt und an den zumindest ein Daumen D der haltenden Hand M anlegbar ist.

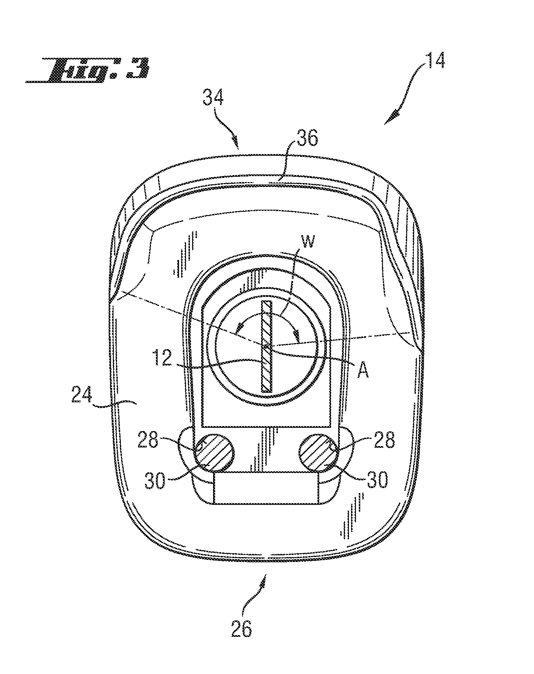

Ferner sind an dem Gerätehals 14 auf einer ersten Seite 26 der Werkzeuganordnung 6, die im normalen Betrieb der Hubsäge 2 eine Unterseite bildet, Festlegemittel 28 in Form von zwei zylindrischen Aufnahmen vorgesehen, wie insbesondere aus den Fig. 2 und 3 zu entnehmen ist. An diesen Festlegemitteln 28 sind zwei stangenförmige Trägermittel 30 einer Führungshilfe 32 in Form eines Führungsschuhes festlegbar.

Auf einer von der ersten Seite 26 abgewandten zweiten Seite 34 bezüglich der Werkzeugaufnahme 6, die im normalen Betrieb der Hubsäge 2 eine Oberseite bildet, ist ein Abschirmelement 36 vorgesehen. Dieses erstreckt sich im Wesentlichen parallel zur Hubachse von dem Kragen 24 weg und über einen Winkelbereich w von wenigstens 90° in radialer Richtung um die Hubachse A herum, wie insbesondere aus Fig. 3 zu entnehmen ist.

Durch das Abschirmelement 36 wird sichergestellt, dass der auf der zweiten Seite 34 anliegende Daumen D, beziehungsweise bei um 180° verdrehter Hand M deren kleiner Finger, auch bei Nichtbeachtung der Vorsichtsmassnahmen, wie beispielsweise dem Nichttragen von Sicherheitshandschuhen, nicht unbeabsichtigt auf die Werkzeuganordnung 6 zugreifen kann. Hierzu ist das Abschirmelement 36 bezüglich der Hubachse A auf Höhe des Hubabschnittes H angeordnet.

Bei Verwendung der Führungshilfe 32 wird zudem durch die Trägermittel 30 sichergestellt, dass auch der auf der ersten Seite 26 anliegende Zeigefinger Z nicht unbeabsichtigt in den Hubabschnitt H der Werkzeugaufnahme 10 gerät.

## Patentansprüche

1. Elektrische Hubsäge (2)
mit einer hin- und hergehend antreibbaren Werkzeuganordnung (6), die eine Werkzeugaufnahme (10) aufweist, an der ein Sägeblatt (12) festlegbar ist, und
einem sich entlang einer Hubachse (A) der Werkzeuganordnung (6) erstreckenden Gehäuse (4), das einen Gerätehals (14) mit Haltegriff (20) bildet,
wobei der Gerätehals (14) eine Gehäuseöffnung (18) umschliesst, durch die hindurch ein Abschnitt der Werkzeuganordnung (6) hin- und herbewegbar ist, und
auf einer ersten Seite (26) der Werkzeuganordnung (6) Festlegemittel (28) zur Befestigung einer Führungshilfe (32) vorgesehen sind,
**dadurch gekennzeichnet, dass** auf einer zweiten Seite (34) der Werkzeuganordnung (6) ein von der Führungshilfe (32) getrenntes Abschirmelement (36) vorgesehen ist, das sich von einem werkzeugseitigen Ende (16) des Gerätehalses (14) weg über einen aus der Gehäuseöffnung (18) herausstehenden Abschnitt der Werkzeuganordnung (6) teilweise hinweg erstreckt.

2. Elektrische Hubsäge nach Anspruch 1, **dadurch gekennzeichnet, dass** das Abschirmelement (36) einteilig mit dem Haltegriff (20) ausgebildet ist.

3. Elektrische Hubsäge nach Anspruch 2, **dadurch gekennzeichnet, dass** das Abschirmelement (36) an einem sich quer zur Hubachse (A) erstreckenden Kragen (24) des Haltegriffes (20) ausgebildet ist.

4. Elektrische Hubsäge nach einem der Ansprüche 1 bis 3, **dadurch gekennzeichnet, dass** sich das Abschirmelement (36) über einen Winkelbereich (w) von wenigstens 90° um die Hubachse (A) herum erstreckt.

5. Elektrische Hubsäge nach einem der Ansprüche 1 bis 4, **dadurch gekennzeichnet, dass** sich das Abschirmelement (36) bezüglich der Werkzeuganordnung (6) auf einer von den Festlegemitteln (28) abgewandten Seite vom Gehäuse (4) weg erstreckt.

6. Elektrische Hubsäge nach einem der Ansprüche 1 bis 5, **dadurch gekennzeichnet, dass** das Abschirmelement (36) auf Höhe eines Hubabschnittes (H) der Werkzeugaufnahme (10) angeordnet ist.
